# EUROPÄISCHE PATENTSCHRIFT

(11) **EP 3 003 683 B1**
(45) Veröffentlichungstag und Bekanntmachung des Hinweises auf die Patenterteilung: **07.10.2020**
(21) Anmeldenummer: 14732507.0
(22) Anmeldetag: 23.05.2014
(51) Int. Cl.: B29C 48/90, B29C 48/12, B29C 48/09

(54) **KALIBRIERVORRICHTUNG, KALIBRIERVERFAHREN UND VERFAHREN ZUM HERSTELLEN EINER KALIBRIERVORRICHTUNG**
CALIBRATING DEVICE, CALIBRATING METHOD AND METHOD FOR PRODUCING A CALIBRATING DEVICE
DISPOSITIF DE CALIBRAGE, PROCÉDÉ DE CALIBRAGE ET PROCÉDÉ DE PRODUCTION D'UN DISPOSITIF DE CALIBRAGE

(30) Priorität: 24.05.2013 DE 102013209703
(43) Veröffentlichungstag der Anmeldung: 13.04.2016
(73) Patentinhaber: Greiner Tool.Tec GmbH, 4542 Nussbach (AT)
(72) Erfinder: FISCHER, Bernhard, A-4552 Wartberg (AT); ANDERS, Gerhard, A-4551 Ried (AT); WEIERMAYER, Leopold, A-Wartberg 4552 (AT); KRUMBÖCK, Erwin, A-4052 Ansfelden (AT)
(74) Vertreter: Maikowski & Ninnemann Patentanwälte Partnerschaft mbB
(86) Internationale Anmeldenummer: PCT/EP2014/060682
(87) Internationale Veröffentlichungsnummer: WO 2014/187966

(56) Entgegenhaltungen:
- EP-A1- 1 201 398
- WO-A1-2012/173327
- CN-A- 102 601 973
- CN-A- 102 962 979
- CN-U- 202 264 382
- DE-A1- 4 129 881
- KR-B1- 100 730 641

## Beschreibung

Die Erfindung betrifft eine Kalibriervorrichtung gemäß dem Oberbegriff des Anspruchs 1, ein Kalibrierverfahren gemäß Anspruch 11 sowie ein Verfahren zum Herstellen einer Kalibriervorrichtung gemäß Anspruch 12.

Kunststoffprofile aus thermoplastischen Kunststoffen werden insbesondere mittels Extrusion hergestellt. Dabei werden für die Formgebung eines Kunststoffprofils eine Düse und eine sog. Kalibrierung verwendet.

Kalibrierungen für die Herstellung von Kunststoffprofilen, z.B. Fensterprofilen, weisen üblicherweise eine Trocken- und eine Nasskalibrierungsvorrichtung auf, wobei das heiße Extrudat nach dem Austritt aus der Düse zunächst die Trockenkalibrierungs- und anschließend die Nasskalibrierungsvorrichtung durchläuft. Am Ende der Kalibrierung und nach vollständigem Abkühlen des Kunststoffprofils auf Raumtemperatur muss das Kunststoffprofil die gewünschte Kontur aufweisen.

Die Nasskalibrierungsvorrichtung weist z.B. mehrere hintereinander angeordnete Vakuumtanks zur weitgehenden Abkühlung des Kunststoffprofils auf, nachdem dieses bereits teilweise in der Trockenkalibrierung abgekühlt worden ist. In der Nasskalibrierungsvorrichtung sind etwa in Abständen von eingangs ca. 100 mm bis ausgangs ca. 500 mm Kalibrierelemente (sogenannte Kurzkalibratoren oder Blenden) angeordnet, welche jeweils eine Durchgangsöffnung aufweisen, die weitgehend der Geometrie des Kunststoffprofils entspricht.

Die Vakuumtanks sind grundsätzlich allseitig geschlossen, und weisen nur an den Stirnseiten Öffnungen für den Ein- und Austritt des Kunststoffprofils auf. Die Vakuumtanks werden mit Unterdruck in einer Größenordnung von ca. 30 bis 200 mbar beaufschlagt, wodurch das Kunststoffprofil geringfügig "aufgebläht" wird und sich an die Durchgangsöffnungen der Kalibrierelemente anlegt.

Das Kunststoffprofil kühlt somit in einer definierten Gestalt ab, so dass die Formhaltigkeit gewährleistet wird. Das Kühlwasser durchfließt die Vakuumtanks ausgehend von wenigen Zuleitungen bis zu wenigen Ableitungen. Der Unterdruck in den Vakuumtanks muss nur über einen Unterdruckanschluss aufgebracht werden und wirkt dann in allen Vakuumtank-Innenräumen.

Der Fertigungsaufwand für die Kalibrierelemente ist vergleichsweise gering, weil diese keine Versorgungs- und Verteilbohrungen für Unterdruck und Kühlwasser benötigen.

Die der Nasskalibrierungsvorrichtung vorgeschaltete Trockenkalibrierungsvorrichtung weist bis zu acht Kalibrierelemente auf. Diese Kalibrierelemente weisen jeweils Laufflächen auf, die in etwa der Kontur des Kunststoffprofils entsprechen. Es bestehen jedoch im Detail maßliche bzw. geometrische Unterschiede, um der Längenreduzierung mit abnehmender Temperatur des Kunststoffes zu folgen und um den Verzug infolge unterschiedlicher Abkühlgeschwindigkeiten auszugleichen.

Insbesondere im Bereich der Vakuumtanks hat das Kunststoffprofil direkten Kontakt zum Kühlwasser. Partikel aus dem Kühlwasser, z.B. Sand- oder Kalkteilchen, können sich an den empfindlichen Laufflächen der Kalibrierelemente oder an deren Einlaufkante anlagern, wodurch dann an der Kunststoffprofiloberfläche Kratzer verursacht werden. Störend sind derartige Kratzer hauptsächlich an den Sichtflächen von Kunststoffprofilen. Das sind jene Flächen der Kunststoffprofile, die z.B. im fertig eingebauten Fenster nach innen in den Raum oder nach außen ins Freie orientiert sind.

Erfahrungsgemäß ist das Kühlwasser infolge der vergleichsweise langen Verwendungsdauer in der Extrusionsanlage häufig durch organische und / oder anorganische Verunreinigungen (z.B. Partikel) verschmutzt. Erkennbar ist dies daran, dass das Kühlwasser meistens leicht bis stark trüb ist.

Die WO 2012/173327 A1 offenbart eine Kalibriervorrichtung mit einem Kalibrierelement mit einer Öffnung zum Hindurchführen eines Extrusionsprofils und einer rotierbaren Führungsrolle, die sich beim Hindurchführen des Profils durch die Öffnung in Kontakt mit dem Profil befindet.

Die KR 100 730 641 B1 zeigt eine Kalibriervorrichtung mit einem Kalibrierelement, das eine Öffnung aufweist, und einer rotierbaren Rolle. An der Rolle sind zur Lagerung zwei Zapfen angeformt, die jeweils in eine Aussparung des Kalibrierelementes einsetzbar sind.

Weitere Kalibriervorrichtungen sind in der EP 1 201 398 A1 und der DE 41 29 881 A1 beschrieben.

Darüber hinaus offenbart die CN 102 962 979 A eine Kalibriervorrichtung mit einer an einem Kalibrierelement gelagerten Führungsrolle. Derartige Kalibriervorrichtungen sind auch aus der CN 102 601 973 A und der CN 202 264 382 U bekannt.

Aus der Patentanmeldung DE 10 2012 218 140.7 vom 04.10.2012 desselben Anmelders geht hervor, dass die empfindlichen Sichtflächen eines Profils im Vakuumtank durch Führungselemente in Form von Rollen abgestützt werden können. Auf die DE 10 2012 218 140.7 wird hiermit insofern ausdrücklich Bezug genommen.

Schmutzpartikel aus dem Kühlwasser, welche in den Spalt zwischen Rollen- und Profiloberfläche gelangen und sich dort anlagern, können daher keinen langen Kratzer verursachen, sondern bestenfalls einen einmaligen Abdruck. Nach dem "Durchrollen" durch den Spalt verbleiben die Partikel dann in der Regel wieder im Kühlwasser.

Da die Rollen nicht angetrieben werden oder weil ein Antrieb sehr aufwendig wäre, ist es sehr wichtig, dass die Rollen leichtgängig sind, damit diese nicht stehen bleiben und dann erst recht zu Kratzern führen. Die Rollen müssen daher eine möglichst reibungsarme Lagerung aufweisen, welche im gegebenen Umfeld, wie mehr oder weniger verschmutztes Wasser und sehr beengte Platzverhältnisse, möglichst zuverlässig ein Stehenbleiben der Rollen verhindert und welche z.B. auch eine genaue Positionierung der Rolle erlaubt.

Der vorliegenden Erfindung liegt das Problem zugrunde, eine möglichst kostengünstige und dennoch zuverlässige Möglichkeit anzugeben, Beschädigungen eines extrudierten Profils während des Kalibiervorganges zu vermeiden.

Dieses Problem wird durch die Kalibriervorrichtung mit den Merkmalen des Anspruchs 1 sowie durch die Verfahren mit den Merkmalen der Ansprüche 11 und 12 gelöst. Weiterbildungen der Erfindung sind in den abhängigen Ansprüchen angegeben.

Danach wird eine Kalibriervorrichtung gemäss Anspruch 1 für eine Kalibrierung, insbesondere einer Nasskalibrierung, einer Extrusionsvorrichtung, bereitgestellt, mit
- einem Kalibrierelement (etwa in Form einer Kurzkaliberplatte oder einer Blende), das eine Öffnung zum Hindurchführen eines mittels einer Extrusionsdüse der Extrusionsvorrichtung erzeugten Profils aufweist;
- mindestens einem rotierbaren Führungselement in Form einer Führungsrolle, das sich beim Hindurchführen des Profils durch die Öffnung in Kontakt mit dem Profil befindet, wobei
- mindestens ein separates, in eine (z.B. nach Art eines Ausschnitts ausgebildete) Aussparung des Kalibrierelementes (insbesondere passgenau) einsetzbares Lagerelement, über das das Führungselement rotierbar an dem Kalibrierelement lagerbar ist, dadurch gekennzeichnet, dass
- das Lagerelement derart kraftschlüssig an dem Kalibrierelement fixiert ist, dass einem Verschieben des Lagerelements in der Bewegungsrichtung des Profils entgegengewirkt wird und/oder das Lagerelement mindestens einen Anschlag aufweist, der mit einer Kante oder einer die Aussparung begrenzenden Fläche des Kalibrierelementes so zusammenwirkt, dass er das Lagerelement formschlüssig gegen Verschieben in der Bewegungsrichtung des Profils sichert.

Die Führungsrolle ist z.B. über zwei einander entlang seiner Rotationsachse gegenüberliegender Lagerelemente, die jeweils in einer Aussparung des Kalibrierelementes angeordnet sind, an dem Kalibrierelement rotierbar gelagert.

Die Außenfläche einer derartigen Führungsrolle ist nicht zwingend zylindrisch gestaltet, sondern kann z.B. auch eine bauchige (konvexe) Gestalt aufweisen. Eine (zumindest leicht) konvexe Form der Rolle führt zu einem gewünschten leichten Eindrücken (d.h. einer konkaven Verformung) einer ebenen Sichtfläche des Profils während des Abkühlvorganges nach der Extrusion. Erst nach dem vollständigen Abkühlen bildet sich dann eine weitgehend ebene Fläche aus.

Dass die Führungsrolle nicht unmittelbar an dem Kalibrierelement gelagert wird, sondern über das separate (d.h. separat gefertigte) Lagerelement, kann z.B. den Vorteil haben, dass das Material des Lagerelementes unabhängig vom Material des Kalibrierelementes gewählt werden kann; s.u.

Die Kalibrierung dient insbesondere, wie eingangs bereits erwähnt, zur Kalibrierung von extrudierten Profilen, insbesondere von Kunststoffprofilen (etwa von Fensterprofilen).

Die Aussparung erstreckt sich insbesondere von einer der Extrusionsdüse zuzuwendenden Stirnfläche bis zu einer der Extrusionsdüse abzuwendenden Stirnfläche des Kalibrierelementes, d.h. die Aussparung erstreckt sich in Extrusionsrichtung vollständig durch das Kalibrierelement hindurch. Das Lagerelement kann entsprechend durch Einschieben in die Aussparung entlang einer Richtung senkreckt zu den Stirnflächen des Kalibrierelementes in das Kalibrierelement eingesetzt werden.

Das Lagerelement realisiert insbesondere ein Gleitlager, wobei es insbesondere kraft- und oder formschlüssig an dem Kalibrierelement fixiert ist; nämlich derart, dass einer Verschiebung der Lagerelemente in Richtung der Bewegungsrichtung des Profils (d.h. entlang dessen Längsrichtung, im Folgenden als Extrusionsrichtung bezeichnet) entgegengewirkt oder eine solche Verschiebung ganz verhindert wird.

Beispielsweise weist das Lagerelement mindestens eine keilförmige Struktur (etwa nach Art einer von dem übrigen Lagerelement nach außen abstehenden Rippe) auf, die mit einer Begrenzungsfläche der Aussparung (d.h. einer die Aussparung begrenzenden Fläche des Kalibrierelementes) so zusammenwirken kann, dass sie das Lagerelement kraftschlüssig an dem Kalibrierelement fixiert (klemmt). Die keilförmige Struktur verläuft z.B. über die gesamte Länge (gemessen in Extrusionsrichtung des Profils nach Einsetzen des Lagerelementes in die Aussparung des Kalibrierelementes) des Lagerelementes. Denkbar ist natürlich auch, dass sich die keilförmige Struktur nur über einen Teil der Länge des Lagerelementes erstreckt. Beispielsweise ist die keilförmige Struktur (bzw. die mehreren keilförmigen Strukturen) nur an einem Ende, nämlich insbesondere an dem der Extrusionsdüse zugewandten Ende, des Lagerelementes ausgebildet.

Gemäß einer anderen Ausgestaltung der Erfindung ist das Lagerelement in Längsrichtung schwach gekrümmt ausgebildet (d.h. der Scheitel der Krümmung weist in eine Richtung quer zur Längsrichtung des Lagerelementes), so dass es mit einem Abschnitt einer ersten Längseite und mit zwei Abschnitten einer zweiten Längsseite, die der ersten Längsseite gegenüberliegt, an den Begrenzungsflächen der Aussparung so anliegen kann, dass das Lagerelement kraftschlüssig an dem Kalibrierelement fixiert ist.

Insbesondere verläuft das Lagerelement nach Art eines Bogens (z.B. nur leicht) gekrümmt, d.h. die Krümmung erstreckt sich über die gesamte Länge des Lagerelementes. Wird ein derartiges Lagerelement in einer prismatischen Nut angeordnet (eingeschoben), liegt das Lagerelement insbesondere entlang dreier Linien an Innenseiten der Nut an, nämlich mit der ersten Längsseite entlang einer Linie, die sich im Bereich des Krümmungsscheitels (der sich z.B. in der Mitte der Längsseite des Lagerelementes befindet) erstreckt sowie mit der zweiten Längsseite entlang zweier weiterer Linien, die sich im Bereich eines ersten Endes (der Extrusionsdüse zugewandt) und im Bereich eines zweiten Endes (der Extrusionsdüse abgewandt) erstrecken.

Insbesondere ist die Breite der Nut etwas kleiner als die entsprechende größte Breite (d.h. des Abstandes zwischen dem Bereich der maximalen und der minimalen Auslenkung) des Lagerelementes, so dass das Lagerelement beim Einführen in die Nut gewissermaßen aufgebogen (d.h. sein Krümmungsradius vergrößert) und somit gegen die Innenseite der Nut vorgespannt wird.

Denkbar ist auch, dass das Lagerelement mindestens einen Anschlag (etwa in Form eines Längsanschlages) aufweist, der mit einer Eintrittskante und/oder einer Begrenzungsfläche der Aussparung so zusammenwirken kann, dass er das Lagerelement formschlüssig gegen Verschieben in Extrusionsrichtung sichert. Insbesondere ist der Anschlag an dem der Extrusionsdüse zugewandten (d.h. bezgl. der Extrusionsrichtung stromaufwärts befindlichen) Ende des Lagerelementes ausgebildet (etwa an einer Stirnseite dieses Endes), so dass eine möglichst genaue axiale Positionierung des Lagerelementes gegenüber dem Kalibrierelement gewährleistet ist.

Gemäß einer weiteren Variante der Erfindung weist das Kalibrierelement mindestens einen Anschlag auf, über den das Lagerelement formschlüssig gegen Verschieben in der Bewegungsrichtung des Profils sicherbar ist. Der Anschlag ist z.B. an einem der Extrusionsdüse abgewandten Ende der Aussparung (etwa an einer Stirnfläche des Kalibrierelementes) vorgesehen.

Möglich ist auch, dass das Lagerelement einen federnden Abschnitt aufweist, der mit einer Begrenzungsfläche der Aussparung so zusammenwirken kann, dass er das Lagerelement kraftschlüssig an dem Kalibrierelement fixiert. Beispielsweise ist der federnden Abschnitt ist z.B. in Form einer federnden Zunge ausgebildet, der nach Einsetzen des Lagerelementes in die Aussparung gegen eine Begrenzungsfläche (Passfläche) der Aussparung drückt.

Alternativ oder zusätzlich kann auch das Kalibrierelement einen federnden Abschnitt (etwa ein federnde Zunge) aufweisen, der so auf das Lagerelement wirken kann, dass das Lagerelement kraftschlüssig an dem Kalibrierelement fixiert ist.

Die erfindungsgemäße Kalibriervorrichtung kann zudem auch ein das Kalibrierelement bis zu der Aussparung durchdringendes Befestigungselement umfassen, über das das Lagerelement an dem Kalibrierelement fixierbar ist. Beispielsweise erstreckt sich das (z.B. als Schraube oder Bolzen ausgebildete) Befestigungselement mit einem Abschnitt - in Extrusionsrichtung des Profils betrachtet - hinter dem Lagerelement (so dass es mit dessen Stirnseite des der Extrusionsdüse abgewandten Endes zusammenwirken kann), drückt stumpf gegen das Lagerelement (gegen eine Längsseite), ragt in eine Einsenkung des Lagerelementes hinein oder ist in eine Gewindebohrung des Lagerelement einschraubbar.

Gemäß einer anderen Weiterbildung der Erfindung ist an der Führungsrolle mindestens ein Lagerzapfen angeformt oder ein Lagerstift eingesetzt, über den die Führungsrolle an dem Lagerelement lagerbar ist. Der Lagerzapfen bzw. der Lagerstift greift insbesondere in eine korrespondierende Bohrung des Lagerelementes oder in eine in eine Bohrung des Lagerelementes eingesetzte Hülse ein.

Denkbar ist auch, dass an dem Lagerelement ein (z.B. zylindrischer) Lagerzapfen angeformt oder ein Lagerstift eingesetzt ist, wobei der Lagerzapfen oder der Lagerstift insbesondere in eine Bohrung der Führungsrolle oder in eine in eine Bohrung der Führungsrolle eingesetzte Hülse eingreift. Die betreffenden Bohrungen sind in die beiden Stirnflächen der Führungsrolle koaxial zu dessen Rotationsachse eingesenkt.

Zwischen dem (an der Führungsrolle oder dem Lagerelement vorgesehenen) Lagerzapfen und der (entsprechend umgekehrt an dem Lagerelement bzw. der Führungsrolle ausgebildeten) Lagerbohrung muss nicht zwingend eine enge Passung vorliegen, sondern es kann auch ein deutlicher Unterschied zwischen dem Außendurchmesser des Lagerzapfens und dem Innendurchmesser der Lagerbohrung vorliegen; z.B. Außendurchmesser Lagerzapfen: 4,0 mm und Innendurchmesser Lagerbohrung: 4,5 mm.

Im Betrieb der Kalibriervorrichtung läuft infolge der Krafteinwirkung auf die rotierbare Führungsrolle der Führungszapfen "auf Anlage" in der größeren Bohrung, wobei die effektive Position des Lagerelementes abhängig von dem Durchmesserunterschied entsprechend vertikal versetzt ist. Dieses große Lagerspiel erlaubt während der Montage der zur Lagerung der Führungsrolle üblicherweise verwendeten zwei Lagerelemente ein stärkeres "Schrägstellen" der Führungsrolle, wenn die beiden Lagerelemente nicht exakt synchron in die Aussparungen in dem Kalibrierelement eingeschoben werden, so dass die Lagerkomponenten (Lagerzapfen, Lagerbohrung) auf beiden Seiten der Führungsrolle nicht infolge Verkantens beschädigt werden. Außerdem führen kleine Partikel aus dem umgebenden Kühlwasser nicht zu einem Verklemmen und Blockieren der Führungsrolle, wie das bei einem vergleichsweise engen Lagerspalt (d.h. geringem Unterschied zwischen dem Außendurchmesser des Lagerzapfens und dem Innendurchmesser der Lagerbohrung) der Fall wäre.

Die Lagerbohrung in dem Lagerelement kann an unterschiedlichen vertikalen Positionen vorgesehen werden, wodurch unterschiedliche vertikale Positionen der Führungsrolle bewirkt werden. Beispielsweise kann eine Mehrzahl von Lagerelementen mit unterschiedlichen "Exzenter-Maßen" (d.h. vertikalen Positionen) bevorratet auf Lager gehalten werden; z.B. mit den Maßen (vertikaler Versatz) +/-0 mm; +0,2 mm; +0,4 mm und +0,6 mm. Da die Lagerelemente bevorzugt um eine vertikale Mittelebene symmetrisch ausgeführt sind, können diese sowohl in eine in Extrusionrichtung betrachtet links von der Führungsrolle ausgebildeten Aussparung als auch in eine rechts von der Führungsrolle befindlichen Aussparung eingesetzt und auch bezüglich der Exzenter-Maße nach oben und nach unten orientiert (d.h. um 180° um die Längsachse gedreht) werden. Vier verschiedene Ausführungen des Lagerelementes gestatten daher eine vertikale Verstellung der Rollen im Bereich +/-0,6 mm in 0,2 mm-Schritten, was den Großteil der ansonsten erforderlichen, mechanischen Nacharbeiten ersetzen kann.

Beispielsweise ist ein Bestandteil des Lagerelements und/oder ein Bestandteil der Führungsrolle, aus einem vom Grundwerkstoff unterschiedlichen Metall oder einem Kunststoff ausgebildet. Ein derartiger Bestandteil ist z.B. der oben erwähnte Lagestift oder die ebenfalls erwähnte Hülse. Denkbar ist, dass der zur Lagerung dienende Bestandteil aus einem anderen Material als das Lagerelement bzw. Führungsrolle gebildet ist, so dass eine besonders reibarme und/oder verschleißfeste Materialpaarung zur Anwendung kommen kann.

Beispielsweise handelt es sich wie oben erwähnt bei den zur Lagerung dienenden Bestandteilen um einen Lagerstift und/oder eine in einer Bohrung angeordnete Hülse, wobei das Material des Lagerstiftes bzw. der Hülse insbesondere verschieden ist von dem Material, aus dem die Führungsrolle bzw. das Lagerelement gebildet sind. Insbesondere ist der Bestandteil des Lagerelements (z.B. Führungsstift oder Hülse), welcher im Betrieb eine "Linienlast" erfährt, aus einer gesinterten Metalllegierung oder einem gesinterten Hartmetall ausgebildet, so dass der Verschleiß vermindert ist. Der korrespondierende Bestandteil der Führungsrolle (die Lagerhülse oder der Lagerstift) erfährt im Betrieb eine "Umfangslast", so dass der Verschleiß auf einer größeren Fläche wirksam ist und sich daher maßlich weniger stark auswirkt, wodurch dieser Bestandteil aus einem weniger verschleißfesten Material bestehen kann.

Die Erfindung betrifft auch ein Kalibrierverfahren gemäß Anspruch 11 zum Kalibrieren von Profilen, insbesondere von Kunststoffprofilen, unter Verwendung einer wie oben beschriebenen Kalibriervorrichtung, wobei ein mittels einer Extrusionsdüse einer Extrusionsvorrichtung erzeugtes Profils durch eine Öffnung des Kalibrierelementes hindurchgeführt wird, so dass sich die rotierbare Führungsrolle der Kalibriervorrichtung in Kontakt mit dem Profil befindet.

Die Erfindung betrifft in einem weiteren Aspekt auch ein Verfahren zum Herstellen einer Kalibriervorrichtung gemäß Anspruch 12, mit den Schritten
- Bereitstellen eines Kalibrierelementes, das eine Öffnung zum Hindurchführen eines mittels der Extrusionsvorrichtung erzeugten Profils aufweist;
- Bereitstellen mindestens einer rotierbaren Führungsrolle, die sich beim Hindurchführen des Profils durch die Öffnung in Kontakt mit dem Profil befindet, sowie
- Einsetzen eines Lagerelementes, über das die Führungsrolle rotierbar an dem Kalibrierelement lagerbar ist, in eine Aussparung des Kalibrierelementes, dadurch gekennzeichnet, dass
- das Lagerelement derart kraftschlüssig an dem Kalibrierelement fixiert wird, dass einem Verschieben des Lagerelements in der Bewegungsrichtung des Profils entgegengewirkt wird und/oder das Lagerelement mindestens einen Anschlag aufweist, der mit einer Kante oder einer die Aussparung begrenzenden Fläche des Kalibrierelementes so zusammenwirkt, dass er das Lagerelement formschlüssig gegen Verschieben in der Bewegungsrichtung des Profils sichert.

Die Führungsrolle und das Lagerelement sind insbesondere wie weiter oben beschrieben ausgebildet.

Möglich ist, dass mehrere unterschiedliche Lagerelemente bereitgestellt werden, die unterschiedliche vertikale Positionen der Rotationsachse der Führungsrolle relativ zu dem Kalibrierelement definieren, und eines der Lagerelemente ausgewählt und in die Aussparung des Kalibrierelementes eingesetzt wird.

Beispielsweise weisen die Lagerelemente unterschiedlich positionierte Lagerbohrungen oder Lagerzapfen auf. Insbesondere sind die Lagerbohrungen oder Lagerzapfen mit unterschiedlichem vertikalen Versatz ausgebildet, wie oben bereits erwähnt. Denkbar ist insbesondere, dass Lagerelemente mit einem vertikalen Versatz der Lagerbohrung bzw. des Lagerzapfens (bezogen auf eine mittige Position) von +/-0 mm; +0,2 mm; +0,4 mm und +0,6 mm bereitgestellt werden.

Die Erfindung wird im Folgenden anhanden von Ausführungsbeispielen unter Bezugnahme auf die Figuren näher erläutert. Es zeigen:
- Fig. 1: eine perspektivische Ansicht einer Kalibriervorrichtung gemäß einem ersten Ausführungsbeispiel der Erfindung;
- Fig. 2: die Kalibriervorrichtung aus Fig. 1 in Draufsicht;
- Fig. 3: einen vergrößerten Ausschnitt der Kalibriervorrichtung der Fig. 1 und 2 in Schnittansicht;
- Fig. 4: den Ausschnitt der Fig. 3 ohne Führungsrolle in Draufsicht und ohne Darstellung der stirnseitig vorhandenen Fase;
- Fig. 5: die Führungsrolle der Kalibriervorrichtung der Fig. 1 bis 3 in perspektivischer Darstellung;
- Fig. 6: das Lagerelement der Kalibriervorrichtung der Fig. 1 bis 3 in perspektivischer Darstellung;
- Fig. 7: eine Abwandlung der Führungsrolle der Fig. 5;
- Fig. 8: eine Abwandlung des Lagerelementes der Fig. 6;
- Fig. 9: eine weitere Abwandlung des Lagerelementes der Fig. 6;
- Fig. 10: das Lagerelement der Fig. 9 in verformtem Zustand der federnden Zunge;
- Fig. 11: eine andere Abwandlung des Lagerelementes, nach der es sich in Längsrichtung gekrümmt erstreckt;
- Fig. 12: das Lagerelement aus Fig. 11 nach Einsetzen in die Aussparung des Kalibrierelementes;
- Fig. 13: eine weitere Ausführungsform des Lagerelementes;
- Fig. 14A und B: unterschiedliche Ansichten eines Kalibrierelementes (Blende), 14A in Draufsicht, 14B in perspektivischer Darstellung, wobei die Rückseite aus Ansicht 14A oben liegt;
- Fig. 15: eine erste vergrößerte (5:1) Detailansicht des Kalibrierelementes (Blende) der Fig. 14A;
- Fig. 16: eine zweite vergrößerte (5:1) Detailansicht des Kalibrierelementes (Blende) der Fig. 14B;
- Fig. 17A bis D: Weitere Möglichkeiten der Befestigung eines Lagerelementes an einem Kalibrierelement; und
- Fig. 18: eine weitere Ausgestaltung des Lagerelementes.

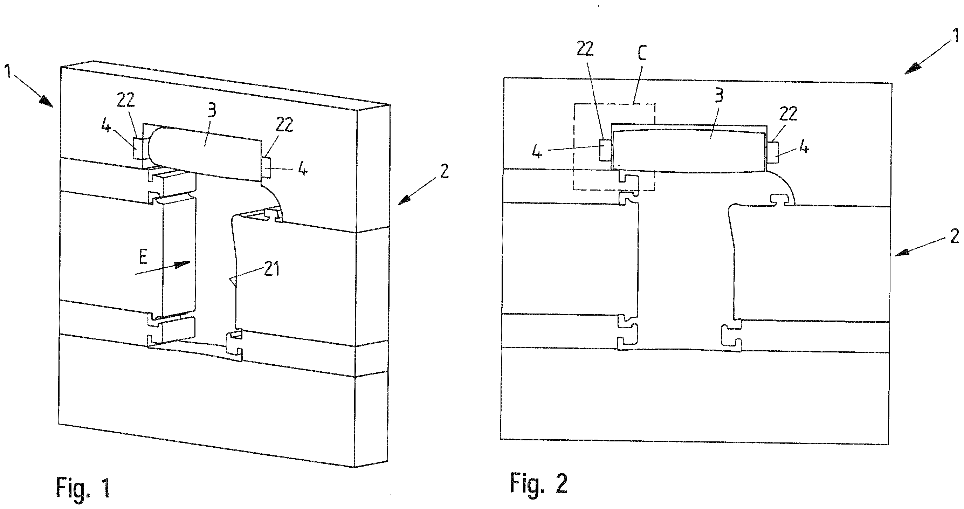

Fig. 1 zeigt eine erfindungsgemäße Kalibriervorrichtung 1 mit einem als Blende 2 ausgebildeten Kalibrierelement. Die Kalibriervorrichtung 1 wird in einer Kalibrierung (insbesondere einer Nasskalibrierung) einer Extrusionsvorrichtung (nicht dargestellt) verwendet.

Die Blende 2 weist eine zentrale Öffnung 21 auf, durch die hindurch ein per Extrusion erzeugtes Profil (nicht dargestellt) während der Nachbehandlung in der Kalibrierung hindurchgeführt wird. Entsprechend weist die Öffnung 21 korrespondierend zu dem Querschnitt des Profils verlaufende Führungsflächen auf. An einer oberen Seite ist die Öffnung 21 durch ein Führungselement in Form einer Führungsrolle 3 begrenzt.

Die Führungsrolle 3 liegt beim Durchführen des Profils (entlang der Extrusionsrichtung E) durch die Öffnung 21 an einer Außenseite des Profils an, so dass die Bewegung des Profils eine Rotationsbewegung der Führungsrolle 3 erzeugt. Bei der Führungsrolle 3 handelt es sich also um eine frei drehbare Rolle, die durch das bewegte Kunststoffprofil mitbewegt wird. Denkbar ist auch, dass zusätzlich oder alternativ zu der Führungsrolle 3 eine untere Führungsrolle vorgesehen ist, die also einen unteren Rand der Öffnung 21 begrenzt.

Gelangen Verunreinigungen zwischen das Profil und die drehbare Führungsrolle 3, werden diese mit der Rotation der Führungsrolle 3 weiter befördert, so dass sie allenfalls einen punktförmigen Abdruck auf dem Profil hinterlassen.

Die Führungsrolle 3 ist nicht unmittelbar an der Blende 2 gelagert, sondern über zwei Lagerelemente (Lagereinsatzteile) 4, die in korrespondierend gestaltete Aussparungen 22 der Blende 2 eingesetzt sind. Die Lagerelemente 4 sind z.B. aus einem anderen Material gebildet als die Blende 2. Die Aussparungen 22 erstrecken sich jeweils von einer einer Extrusionsdüse der Extrusionsvorrichtung zuzuwendenden Stirnfläche bis zu einer der Extrusionsdüse abzuwendenden Stirnfläche der Blende 2 vollständig durch die Blende 2 hindurch.

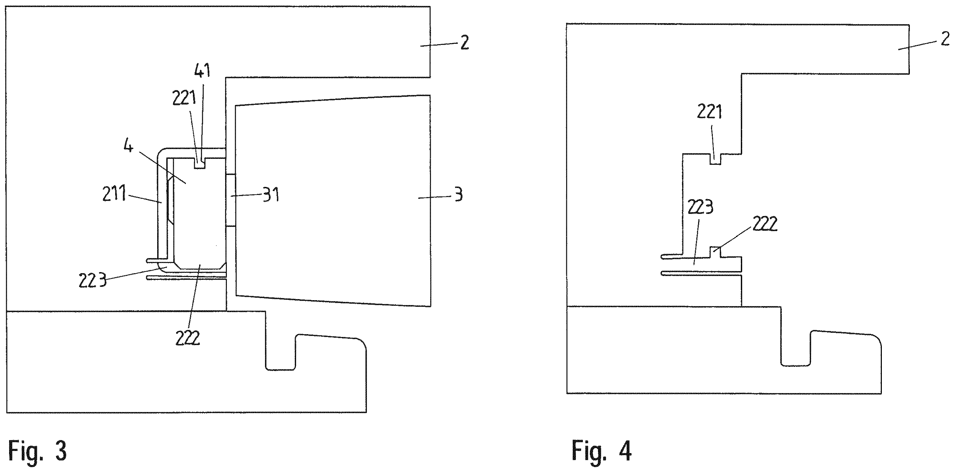

Die Lagerung der Führungsrolle 3 über die Lagerelemente 4 ist vergrößert in Fig. 3 dargestellt (entsprechend dem Bereich C in Fig. 2). Danach greifen Lagerzapfen 31 der Führungsrolle 3 in Bohrungen der Lagerelemente 4 ein, wodurch die drehbare Lagerung der Führungsrolle 3 realisiert wird.

Damit die Lagerelemente 4 reproduzierbar in den Aussparungen 22 der Blende 2 positioniert werden können, weisen die Begrenzungsflächen der Aussparungen 22 jeweils einen oberen und einen unteren stegartigen (im Querschnitt zumindest näherungsweise rechteckigen) Vorsprung 221, 222 auf, der nach Einschieben der Lagerelemente 4 (in Extrusionsrichtung E) in die Aussparungen 22 in entsprechende Nuten 41 der Lagerelemente 4 eingreifen.

Darüber hinaus weisen die Blenden 2 jeweils einen als federnde Zunge 223 ausgebildeten unteren Randabschnitt auf, der jeweils durch zwei horizontale Schnitte in den Blenden 4 freigeschnitten ist. Die Zunge 223 kann beim Einsetzen der Lagerelemente 4 in die Aussparungen 22 etwas nach unten ausweichen, was als Toleranzausgleich wirkt und das Einsetzen der Lagerelemente 4 vereinfacht. Beispielsweise erlaubt die federnde Zunge 223 eine Auslenkung (Federweg), ohne dass sie bleibend verformt wird, von etwa +/- 0,15 mm (bezogen auf ihr zur Führungsrolle 3 weisendes Ende). Der durch die federnde Zunge 223 zur Verfügung stehende Federweg bewirkt insbesondere, dass unvermeidliche Maßschwankungen bei der Fertigung der Lagerelemente 4 keine negative Auswirkung auf die Haltekraft haben und ein häufiges Ein- und Ausbauen der Lagerelemente 4 möglich ist, ohne dass die Passflächen (d.h. Außenseiten der Lagerelemente 4 bzw. die Innenseiten der Aussparungen 22) "ausleiern".

Darüber hinaus weist die Eintrittskante der Öffnung 21 an der der (nicht dargestellten) Extrusionsdüse zugewandten Stirnseite (d.h. bezogen auf die Extrusionsrichtung E einlaufseitig) eine Fase 211, wie dargestellt, oder eine Abrundung auf, damit die Lagerelemente 4 gut angesetzt und dann in die Öffnungen 22 eingeschoben werden können.

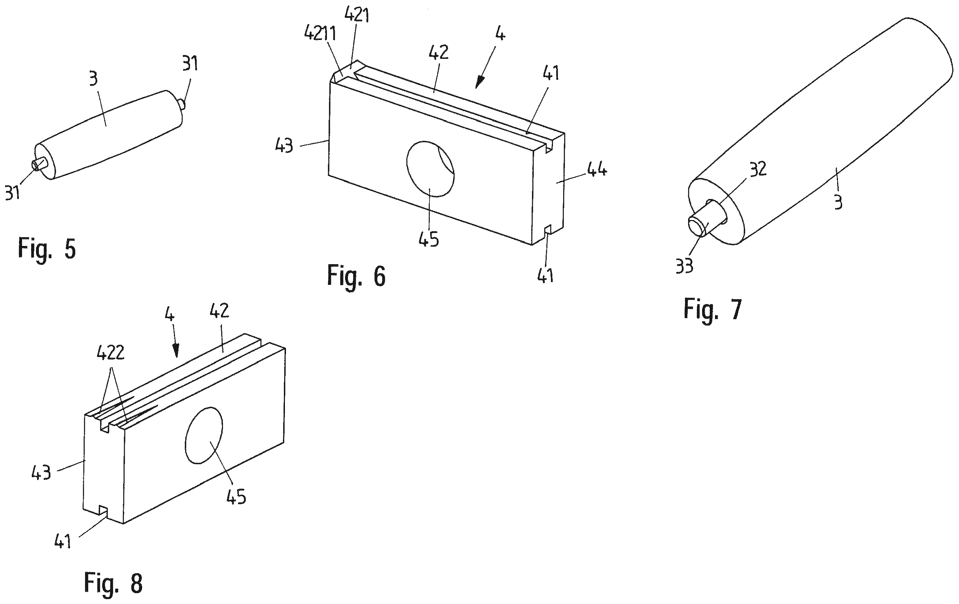

Fig. 5 zeigt die Führungsrolle 3 der Fig. 1 und 2. An den Enden der Führungsrolle 3 sind wie oben bereits erwähnt Lagerzapfen 31 ausgebildet, die jeweils in ein Lagerelement 4 eingreifen. Beispielsweise sind die Lagerzapfen 31 einstückig mit der Rolle 3 ausgeformt. Denkbar ist, dass die Blende 2 im Bereich jeweils der Aussparungen 22 vertikale Begrenzungsflächen aufweisen, gegen die die Lagerzapfen 31 in axialer Richtung (entlang der Extrusionsrichtung E) laufen können und die somit eine Bewegung der Führungsrolle 3 quer zur Extrusionsrichtung E begrenzen.

Die Außenkontur der Führungsrolle 3 ist leicht konvex (tonnenartig) gestaltet, um das durch die Öffnung 21 der Blende 2 laufende Profil zunächst leicht einzudrücken, wie oben bereits erläutert.

Fig. 6 zeigt das Lagerelement 4 der Fig. 1 bis 4. Dieses Lagerelement 4 ist im Wesentlichen prismatisch (insbesondere quaderartig) gestaltet und weist an einer (der im Bild linken) Stirnseite 43 einen von einer Oberseite 42 abstehenden Längsanschlag 421 auf. Dieser Längsanschlag 421 wirkt mit der Fase 211 der Aussparung 22 der Blende 2 zusammen, wobei das Lagerelement 4 beim Einschieben in die Aussparung 22 eine Endlage erreicht, wenn der Längsanschlag 421 an der Fase 211 anliegt. Der Längsanschlag 421 sichert also das Lagerelement 4 formschlüssig gegen ein Verschieben in der Bewegungsrichtung des Profils (d.h. in Extrusionsrichtung E) aus der Aussparung 22 hinaus. Darüber hinaus kann das Lagerelement 4 mit Hilfe des Längsanschlages 421 in axialer Richtung genau positioniert werden, so dass insbesondere eine Lagerbohrung 45 in dem Lagerelement 4, die einen Lagerzapfen 31 der Führungsrolle 3 aufnehmen soll, an die vorbestimmte Position gebracht werden kann. Zudem ist der Längsanschlag korrespondierend zu der Fase 211 mit einer geneigten Anlauffläche 4211 versehen, so dass weder die mit dem Anschlag 421 versehene Stirnfläche 43 noch die gegenüberliegende Stirnfläche 44 des Lagerelementes 4 gegenüber der Blende 2 vorstehen.

Selbstverständlich könnte der Längsanschlag 421 auch an einer anderen Seite des Lagerelementes 4 ausgebildet sein oder es könnten zusätzliche Längsanschläge vorgesehen werden. Dies kann abhängig von den wirkenden Kräften erfolgen, wobei die üblicherweise wirkenden Kräfte keine weiteren Längsanschläge erfordern. Weist die Aussparung 22 keine Fase, sondern eine Abrundung auf, so ist anstelle der geneigten, ebenen Anlauffläche 4211 des Längsanschlages 421 eine Hohlkehle auszubilden.

Das in Fig. 6 dargestellte Lagerelement 4 ist weitgehend symmetrisch ausgebildet, so dass es für die Lagerung der Führungsrolle 3 sowohl in die sich links als auch in die sich rechts von der Führungsrolle 3 befindliche Aussparung 22 eingesetzt werden kann. Die Lagerbohrung 45 des Lagerelementes 4 kann zudem in vertikaler Richtung (d.h. senkrecht zu den schmaleren Längseiten des Lagerelementes 4) versetzt (d.h. außermittig) ausgebildet sein. Eine mittige Positionierung der Bohrung 45 (Null-Position) dient für die Lagerung der Führungsrolle 3 in der (Soll-)Ausgangsposition. Weicht die Höhe (senkrecht zur Längserstreckungsrichtung des Profils) und/oder die Vorspannung des extrudierten Profils von der Soll-Geometrie ab, kann diese Abweichung durch Höher- oder Tiefersetzen der Führungsrolle 3 ausgeglichen werden. Dies kann sehr zweckmäßig dadurch erfolgen, dass anstelle einer mechanischen Nachbearbeitung der Blende 2 lediglich die Lagerelemente 4 durch Lagerelemente ersetzt werden, die eine vertikal versetzte Lagerbohrung aufweisen. Am in Fig. 6 dargestellten Lagerelement 4 kann mit einer nur in einer Richtung (vertikal) versetzten Lagerbohrung 45 sowohl ein Höhersetzen als auch ein Tiefersetzen der Rolle 3 bewirkt werden. Das Lagerelement für die rechte Seite muss ggf. gegenüber jenem für die linke Seite um 180° gedreht werden.

Bei der Materialauswahl für das Lagerelement 4 kann insbesondere auf bevorzugte Lagerwerkstoff-Paarungen Rücksicht genommen werden. Bei der Ausführung der Blende 2 gemäß den Fig. 1 bis 5 ist die Rolle 3 z.B. aus einem rostfreien Stahl gefertigt, wobei auch der (mit der Rolle 3 insbesondere einstückig verbundene) Lagerzapfen 31 aus diesem Stahl ausgebildet sein kann. Eine sehr langlebige Lagerung ist zu erwarten, wenn das Lagerelement 4 aus einem gesinterten Hartmetall gefertigt wird. Grundsätzlich können jedoch alle Metalle, wie z.B. Rotguss- oder Bronzelegierungen, und auch Kunststoffe verwendet werden.

Fig. 7 zeigt eine alternative Ausführungsform der Führungsrolle 3. In diesem Fall wird der Lagerzapfen durch einen in eine stirnseitige Bohrung 32 der Rolle eingesetzten Lagerstift 33 gebildet. Das Material des Stiftes 33 kann somit verschieden von dem Material der Führungsrolle 3 gewählt werden, wobei insbesondere unterschiedliche Metalle verwendet werden können. Darüber hinaus kann als Lagerstift 33 ein genormter Passstift eingesetzt werden, der bezüglich Materialhärte und exakter, polierter Oberfläche geeignet ist und als Normteil preiswert zur Verfügung steht.

Fig. 8 zeigt eine weitere Abwandlung des Lagerelementes 4. Anstelle des Längsanschlages 421 (Fig. 6) stehen von der Oberseite 42 zwei keilförmige Strukturen in Form der sich in Längrichtung des Lagerelementes 4 erstreckenden Rippen 422 ab. Die Rippen 422 springen insbesondere vergleichsweise wenig vor (Größenordnung 0,2 mm maximale Höhe ab der Oberseite 42), wobei ihre Höhe in Längsrichtung des Lagerelementes 4 (in Extrusionsrichtung E) keilförmig auf null ausläuft. Die Länge der Rippen 422 kann jeweils die gesamte Länge des Lagerelementes 4 überdecken oder nur einen Teilbereich, wie in Fig. 8 dargestellt. Die in Fig. 8 dargestellte Ausführung der Rippen 422 ist vor allem dann gut geeignet, wenn das Lagerelement 4 aus einem Hartmetall gesintert wird, so dass die Rippen 422 auch bei mehrmaligem Ein- und Ausbauen des Lagerelementes 4 aus der Blende 2 nicht eingeebnet werden. Beispielsweise kann diese Ausführung des Lagerelementes 4 mit einer Aussparung 22 der Blende 2 ohne federnden Randabschnitt 222 kombiniert werden, wobei ohne Federwirkung infolge kleinräumiger, plastischer Verformung der Begrenzungsflächen der Aussparung 22 (insbesondere der unteren und oberen Begrenzungsfläche) der Blende 2 ein fester Sitz in axialer Richtung erzielt wird.

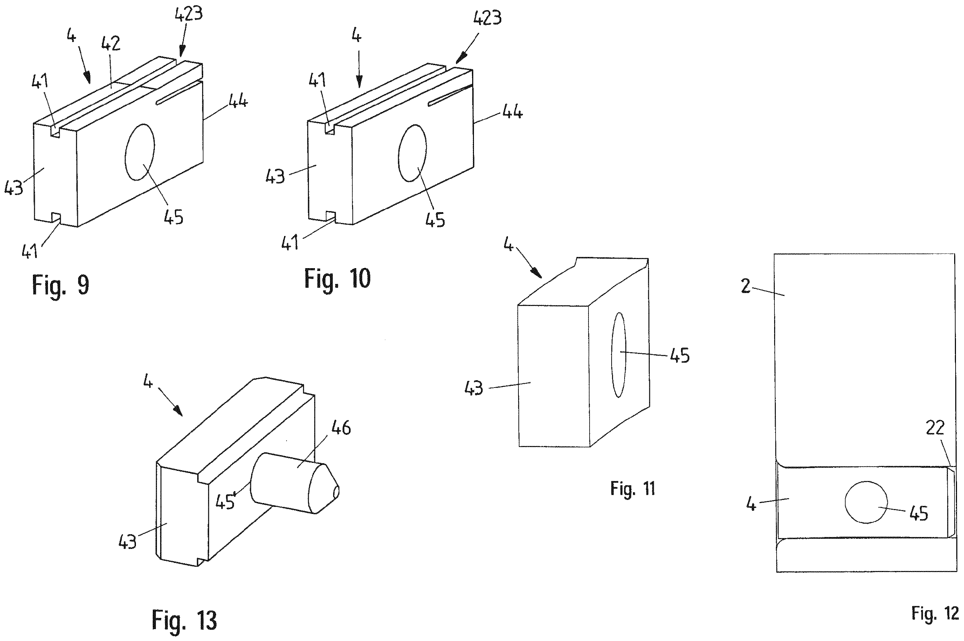

Die Fig. 9 und 10 zeigen eine weitere Ausführungsform des Lagerelementes 4. Am bzgl. der Extrusionsrichtung E stromaufwärts gerichteten (der Extrusionsdüse zugewandte) Ende der Oberseite 42 des Lagerelementes 4 ist eine federnde Zunge 423 vorgesehen. Die Zunge 423 ist durch einen von der Stirnseite 44 ausgehenden Schnitt freigeschnittenen Bereich gebildet. Denkbar ist, dass sich die Nut 41 an der Oberseite 42 entlang auch in den Bereich der Zunge 423 hinein erstreckt.

Fig. 9 zeigt die Zunge 423 unverformt im Ausgangszustand, Fig. 10 nach dem Einsetzen in die Aussparung 22 der Blende 2 im angespannten (eingedrückten) Zustand. Die schlanke und relativ lange Zunge 423 erlaubt eine elastische Biegung, so dass auch nach mehrmaligem Ein- und Ausbauen des Lagerelementes 4 aus der Blende 2 ihre Spannkraft erhalten bleibt und eine exakte Positionierung des Lagerelementes 4 und eine ausreichende kraftschlüssige Verbindung zwischen dem Lagerelement 4 und der Blende 2 gewährleistet wird.

In Fig. 11 ist eine weitere Abwandlung des Lagerelementes 4 für eine kraftschlüssige Fixierung in der Aussparung 22 der Blende 2 dargestellt. In diesem Fall ist das Lagerelement 4 (in Längsrichtung, d.h. nach Einsetzen in die Blende 2 in Extrusionsrichtung E) leicht bogenförmig gekrümmt, wobei sich die Krümmung insbesondere zumindest näherungsweise über die gesamte Länge des Lagerelementes 4 erstreckt.

Wird das Lagerelement 4 in eine Aussparung 22 in Form einer prismatischen Nut (d.h. eine Aussparung mit im Wesentlichen zueinander parallelen und in Extrusionsrichtung E verlaufenden Innenflächen) eingeschoben, ergibt sich eine Anlage auf drei (horizontal verlaufenden) Linien. Gemäß Fig. 12 liegt das Lagerelement 4 über zwei untere Linien im Bereich seiner beiden Enden sowie über eine obere, mittige Linie an der Innenseite der Aussparung 22 an.

Die Höhe der Aussparung 22 (quer zur Haupterstreckungsrichtung des Lagerelementes 4, d.h. vertikal zur Extrusionsrichtung E gemessen) ist etwas kleiner als die maximale Höhenausdehnung des Lagerelementes, d.h. als der Abstand zwischen dem Bereich der maximalen Auslenkung (im Bereich der Enden des Lagerelementes 4) und des Scheitels des Lagerelementes (in der Mitte des Lagerelementes 4); vgl. Fig. 12, die das in die Aussparung 22 eingesetzte Lagerelement 4 zeigt. Beim Einsetzen des Lagerelementes 4 in eine derartige nutartige Aussparung 22 wird das Lagerelement 4 etwas aufgebogen und somit gegen die Innenflächen der Aussparung vorgespannt, so dass das Lagerelement 4 in der Aussparung 22 geklemmt fixiert ist.

Fig. 13 zeigt eine weitere Ausführung des Lagerelementes 4. Hier ist das Lagerelement 4 in Längsrichtung rein prismatisch ausgeführt, weist also insbesondere weder einen Längsanschlag noch keilförmige Rippen auf. Darüber hinaus weist das Lagerelement 4 einen Lagerstift 46 auf, der senkrecht von dem Lagerelement 4 absteht und zur Lagerung der Führungsrolle 3 dient. Der Lagerstift 46 ist z.B. ein separates Teil, das in eine (z.B. zentrale, oder, wie oben beschrieben, in eine vertikal versetzte) Bohrung 45' des Lagerelementes 4 eingesetzt. Denkbar ist allerdings auch, dass der Lagerstift 46 einstückig mit dem Lagerelement 4 ausgebildet ist. Die Führungsrolle 3 weist entsprechend keinen Lagerstift auf, sondern eine Bohrung, in die das (sich insbesondere verjüngende) freie Ende des Lagerstifts 46 eingreift.

Die Verwendung eines separaten Lagerstiftes kann vorteilhaft sein; z.B. kann der zylindrische (üblicherweise stark beanspruchte) Lagerstift einfach hergestellt und etwa aus Hartmetall gesintert werden. Zudem kann für verschiedene Ausgestaltungen des Lagerelementes und/oder der Führungsrolle (insbesondere die oben beschriebenen) die gleiche Geometrie des Lagerstiftes verwendet werden; beispielsweise kann der gleiche Lagerstift auch in eine Bohrung der Rolle eingepresst werden. Denkbar ist zudem, dass das (üblicherweise weniger stark als der Lagerstift beanspruchte) Lagerelement 4 selber aus einem anderen Material als der Lagerstift ausgebildet wird; z.B. aus einem sehr kostengünstigen Werkstoff und etwa nach einem sehr kostengünstigen Verfahren aus Kunststoff oder aus einer Druckgussmetalllegierung gefertigt werden, z.B. per Spritzgieß- oder Druckgussverfahren.

Auch kann der Lagerstift in verschiedenen vertikalen Positionen mit dem Lagerelement verbunden werden, ohne dass der übrige Aufbau des Lagerelementes verändert werden muss. Beispielsweise kann das Lagerelement mit einer Bohrung zur Aufnahme eines Endes des Lagerstiftes versehen werden, die an der gewünschten (insbesondere vertikalen) Position ausgebildet wird.

Die Lagerwerkstoffpaarung (d.h. das Material des feststehende Lagerstifts und der Komponente der Führungsrolle, über das die Lagerung erfolgt, d.h. insbesondere des Bereichs der Führungsrolle, in dem die Bohrung zur Aufnahme des freien Endes des Lagerstiftes ausgebildet ist) kann zudem weitgehend frei von sonstigen Zwängen gewählt werden. Beispielsweise wird der feststehende Lagerteil, der Lagerstift "mit Linienlast", aus einem verschleißfesten Hartmetall gefertigt, welches gut mit dem drehenden Lagerteil, der Bohrung in der Führungsrolle "mit Umfangslast", und dem Material der Führungsrolle, das z.B. wesentlich weicher ist, korrespondiert. Beispielsweise ist die Führungsrolle aus einem (etwa wesentlich) weicheren Stahl als der Lagerstift gebildet.

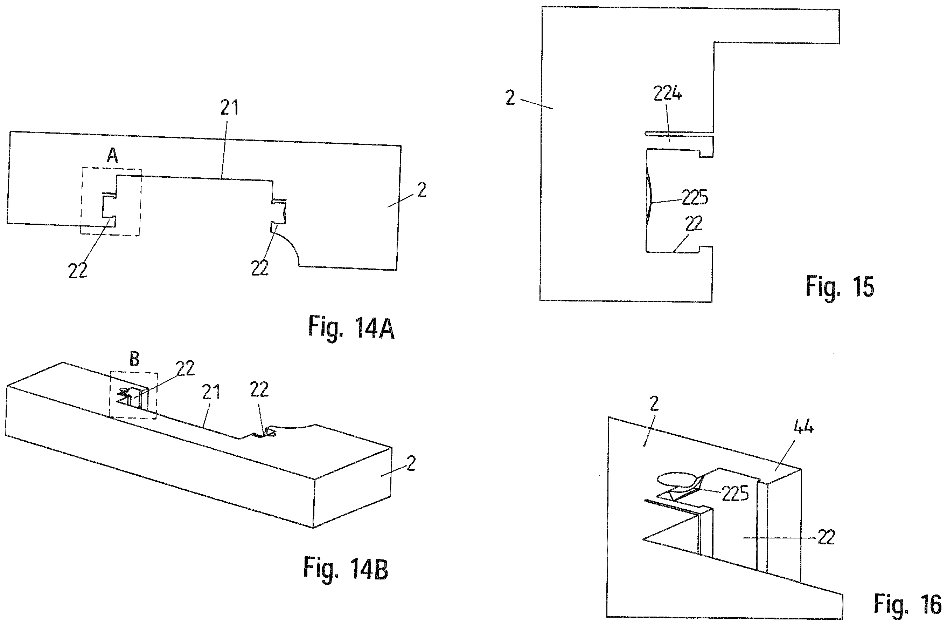

Die Fig. 14A und 14B zeigen unterschiedliche Ansichten eines Teils eines Kalibrierelementes (Blende) 2, das zwei Aussparungen 22 aufweist, in die das Lagerelement der Fig. 13 einsetzbar ist. Die in Fig. 14A linke Aussparung 22 ist vergrößert in Fig. 15 (entsprechend Bereich A in Fig. 14A) und die gleiche Aussparung 22 in verdrehter Lage in Fig. 16 (entsprechend Bereich B in Fig. 14B) dargestellt. Klarstellung: Beide Aussparungen 22 (die linke und die rechte, sind insbesondere zumindest näherungsweise gleich ausgeführt und weisen z.B. beide sowohl eine federnde Zunge als auch einen Längsanschlag "austrittsseitig" (bezogen auf die Extrusionsrichtung) auf.

Der obere Rand der Aussparung ist in Form einer federnden Zunge 224 ausgebildet (ähnlich der unteren Zunge 222 in Fig. 4), welche (unvermeidbare) Fertigungstoleranzen kompensiert und für eine exakte Positionierung sowie für einen sicheren Kraftschluss zwischen dem Lagerelement 4 und der Blende 2 sorgt. An der bezüglich der Extrusionsrichtung E stromabwärts liegenden Stirnfläche 44 der Blende 2 ist ein Längsanschlag 225 angeformt, welcher für eine exakte Längspositionierung des Lagerelementes 4 sorgt.

Ein gemäß der Fig. 16 ausgebildeter, in die Aussparung 22 hineinragender Längsanschlag 225 kann auf einfache Weise erzeugt werden. Beispielsweise wird zur Erzeugung des Längsanschlages 225 anstelle des Lagerelementes 4 ein gehärteter Einsatz in die Aussparung 22 eingesetzt. Mit einer Pressung oder einem Körnerschlag wird das Material (z.B. das Metall) des Randes der Aussparung an der austrittseitigen Kante der Aussparung plastisch verformt, so dass an der gewünschten Position der Längsanschlag 225 ausgeformt wird.

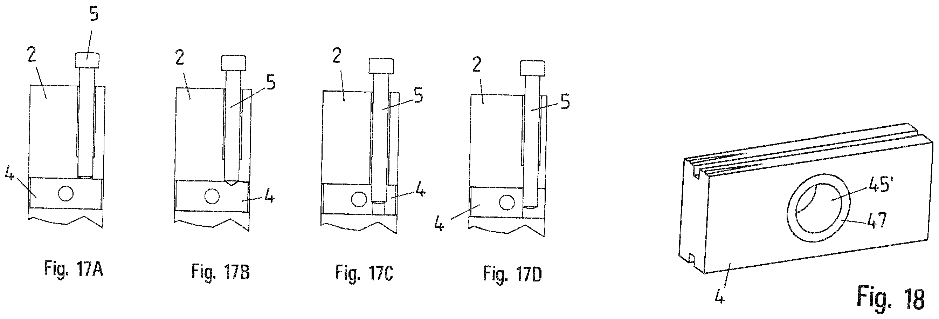

Die Fig. 17A bis 17D zeigen verschiedene Ausführungsformen von form- bzw. kraftschlüssigen Befestigungen des Lagerelementes 4 an der Blende 2. Gemäß Fig. 17A wird eine kraftschlüssige Klemmverbindung dadurch realisiert, dass ein Befestigungselement in Form einer Schaube 5 eine Bohrung in der Blende 2 durchgreift und gegen eine Außenfläche des Lagerelementes 4 drückt.

Nach Fig. 17B drückt eine Schraube 5 (die z.B. einen konischen Kopf aufweist) drückt gegen eine entsprechend ausgebildete Zentrierbohrung in einer (parallel zur Extrusionsrichtung E orientierten) Außenfläche des Lagerelementes, so dass eine kraft- und formschlüssige Klemmverbindung zwischen dem Lagerelement 4 und der Blende 2 entsteht.

Gemäß Fig. 17C wird eine kraft- und formschlüssige Klemmverbindung dadurch erzeugt, dass eine Schraube 5 in eine Gewindebohrung des Lagerelementes 4 eingeschraubt wird. Darüber hinaus kann eine formschlüssige Längspositionierung des Lagerelementes 4 dadurch realisiert werden, dass eine Schraube 5 mit ihrem Gewindeende in die Aussparung nach einer stromabwärts liegenden Stirnfläche (von der Extrusionsdüse abgewandt) des Lagerelementes 4 hineinragt, so dass die Schraube 5 einen Längsanschlag für das Lagerelement 4 bildet.

Fig. 18 zeigt eine weitere Variante des Lagerelementes 4. In eine Bohrung 45 eines Grundkörpers des Lagerelementes 4 ist eine Lagerhülse 47 (z.B. aus einem gesinterten Hartmetall oder einem anderen Metall) als Lagerkomponente eingesetzt. Das Lagerelement 4 kann somit aus einem anderen (insbesondere kostengünstigen) Material hergestellt werden als die Lagerkomponente (die Hülse 47), weil das Lagerelement 4 selber nur wenig belastet wird und daher bezüglich Verschleiß und Reibung keine besonderen Anforderungen an das Material des Lagerelementes 4 gestellt werden müssen und das Material des Lagerelementes 4 auch nicht unbedingt zu dem Material der Lagerkomponente (z.B. Lagerzapfen) auf Seiten der Führungsrolle 3 passen muss.

### Bezugszeichenliste

- 1: Kalibriervorrichtung
- 2: Kalibrierelement (Blende)
- 3: Führungsrolle
- 4: Lagerelement
- 5: Schraube
- 21: Öffnung
- 22: Aussparung
- 31: Lagerzapfen
- 32: Bohrung
- 33: Lagerstift
- 41: Nut
- 42: Oberseite
- 43, 44: Stirnseite
- 45, 45': Bohrung
- 46: Lagerstift
- 47: Lagerhülse
- 211: Fase
- 221, 222: Vorsprung
- 223, 224: federnde Zunge
- 225: Längsanschlag
- 421: Längsanschlag
- 422: Rippe
- 423: Zunge
- 4211: Anlauffläche

## Patentansprüche

1. Kalibriervorrichtung für eine Kalibrierung, insbesondere eine Nasskalibrierung, einer Extrusionsvorrichtung, mit
- einem Kalibrierelement (2), das eine Öffnung (21) zum Hindurchführen eines mittels einer Extrusionsdüse der Extrusionsvorrichtung erzeugten Profils aufweist; und
- mindestens einer rotierbaren Führungsrolle (3), die sich beim Hindurchführen des Profils durch die Öffnung (21) in Kontakt mit dem Profil befindet; und
- mindestens einem separaten, in eine Aussparung (22) des Kalibrierelementes (2) einsetzbaren Lagerelement (4), über das die Führungsrolle (3) rotierbar an dem Kalibrierelement (2) lagerbar ist,
**dadurch gekennzeichnet, dass**
das Lagerelement (4) derart kraftschlüssig an dem Kalibrierelement (2) fixiert ist, dass einem Verschieben des Lagerelements (4) in der Bewegungsrichtung des Profils entgegengewirkt wird und/oder das Lagerelement (4) mindestens einen Anschlag (421) aufweist, der mit einer Kante oder einer die Aussparung (22) begrenzenden Fläche des Kalibrierelementes (2) so zusammenwirkt, dass er das Lagerelement (4) formschlüssig gegen Verschieben in der Bewegungsrichtung des Profils sichert.

2. Kalibriervorrichtung nach Anspruch 1, **dadurch gekennzeichnet, dass** das Lagerelement (4) mindestens eine keilförmige Struktur (422) aufweist, die mit einer Begrenzungsfläche der Aussparung (22) so zusammenwirken kann, dass sie das Lagerelement (4) kraftschlüssig an dem Kalibrierelement (2) fixiert.

3. Kalibriervorrichtung nach einem der vorhergehenden Ansprüche, **dadurch gekennzeichnet, dass** das Lagerelement (4) gekrümmt ausgebildet ist, so dass es mit einem Abschnitt einer ersten Längseite und mit zwei Abschnitten einer zweiten Längsseite, die der ersten Längsseite gegenüberliegt, an einer Innenseite der Aussparung (22) so anliegen kann, dass das Lagerelement (4) kraftschlüssig an dem Kalibrierelement (2) fixiert ist.

4. Kalibriervorrichtung nach einem der vorhergehenden Ansprüche, **dadurch gekennzeichnet, dass** das Kalibrierelement (2) mindestens einen Anschlag (225) aufweist, über den das Lagerelement (4) formschlüssig gegen Verschieben in Extrusionsrichtung (E) des Profils sicherbar ist.

5. Kalibriervorrichtung nach einem der vorhergehenden Ansprüche, **dadurch gekennzeichnet, dass** das Lagerelement (4) einen federnden Abschnitt (423) aufweist, der mit einer Begrenzungsfläche der Aussparung (22) so zusammenwirken kann, dass er das Lagerelement (4) kraftschlüssig an dem Kalibrierelement (2) fixiert.

6. Kalibriervorrichtung nach einem der vorhergehenden Ansprüche, **dadurch gekennzeichnet, dass** das Kalibrierelement (2) einen federnden Abschnitt (223, 224) aufweist, der so auf das Lagerelement (4) wirken kann, dass das Lagerelement (4) kraftschlüssig an dem Kalibrierelement (2) fixiert ist.

7. Kalibriervorrichtung nach einem der vorhergehenden Ansprüche, **gekennzeichnet durch** ein das Kalibrierelement (2) bis zu der Aussparung (22) durchdringendes Befestigungselement (5), über das das Lagerelement (4) an dem Kalibrierelement (2) fixierbar ist, wobei sich das Befestigungselement (5) insbesondere mit einem Abschnitt - in Extrusionsrichtung (E) des Profils betrachtet - hinter dem Lagerelement (4) erstreckt, stumpf gegen das Lagerelement (4) drückt, in eine Einsenkung des Lagerelementes (4) hineinragt oder in eine Gewindebohrung des Lagerelements (4) einschraubbar ist.

8. Kalibriervorrichtung nach einem der vorhergehenden Ansprüche, **dadurch gekennzeichnet, dass** der Lagerzapfen (31) oder der Lagerstift (33) in eine Bohrung (45) des Lagerelementes (4) oder in eine in eine Bohrung (45') des Lagerelementes (4) eingesetzte Hülse (47) eingreift oder dass der Lagerzapfen oder der Lagerstift (46) in eine Bohrung der Führungsrolle (3) oder in eine in eine Bohrung des der Führungsrolle (3) eingesetzte Hülse eingreift.

9. Kalibriervorrichtung nach einem der vorhergehenden Ansprüche, **dadurch gekennzeichnet, dass** ein Bestandteil des Lagerelements (4) und/oder ein Bestandteil der Führungsrolle (3), über die die Führungsrolle (3) an dem Lagerelement (4) lagerbar ist, aus einem Metall oder einem Kunststoff gebildet ist.

10. Kalibriervorrichtung nach einem der vorhergehenden Ansprüche, **dadurch gekennzeichnet, dass** ein Bestandteil des Lagerelements (4), über den die Führungsrolle (3) an dem Lagerelement (4) lagerbar ist, aus einer gesinterte Metalllegierung oder einem gesinterten Hartmetall ausgebildet ist.

11. Kalibrierverfahren zum Kalibrieren von Profilen, insbesondere von Kunststoffprofilen, unter Verwendung einer Kalibriervorrichtung (1) gemäß einem der vorhergehenden Ansprüche, wobei ein mittels einer Extrusionsdüse einer Extrusionsvorrichtung erzeugtes Profils durch eine Öffnung (21) des Kalibrierelementes (2) hindurchgeführt wird, so dass sich die rotierbare Führungsrolle (3) der Kalibriervorrichtung (1) in Kontakt mit dem Profil befindet.

12. Verfahren zum Herstellen einer Kalibriervorrichtung nach einem der vorhergehenden Ansprüche 1 bis 10, mit den Schritten
- Bereitstellen eines Kalibrierelementes (2), das eine Öffnung (21) zum Hindurchführen eines mittels der Extrusionsvorrichtung erzeugten Profils aufweist;
- Bereitstellen mindestens einer rotierbaren Führungsrolle (3), die sich beim Hindurchführen des Profils durch die Öffnung (21) in Kontakt mit dem Profil befindet; und
- Einsetzen eines Lagerelementes (4), über das die Führungsrolle (3) rotierbar an dem Kalibrierelement (2) lagerbar ist, in eine Aussparung (22) des Kalibrierelementes (2),
**dadurch gekennzeichnet, dass**
das Lagerelement (4) derart kraftschlüssig an dem Kalibrierelement (2) fixiert wird, dass einem Verschieben des Lagerelements (4) in der Bewegungsrichtung des Profils entgegengewirkt wird und/oder das Lagerelement (4) mindestens einen Anschlag (421) aufweist, der mit einer Kante oder einer die Aussparung (22) begrenzenden Fläche des Kalibrierelementes (2) so zusammenwirkt, dass er das Lagerelement (4) formschlüssig gegen Verschieben in der Bewegungsrichtung des Profils sichert.

13. Verfahren nach Anspruch 12, **dadurch gekennzeichnet, dass** mehrere unterschiedliche Lagerelemente (4) bereitgestellt werden, die unterschiedliche Positionen der Rotationsachse der Führungsrolle (3) relativ zu dem Kalibrierelement (2) definieren, wobei eines der Lagerelemente (4) ausgewählt und in die Aussparung (22) des Kalibrierelementes (2) eingesetzt wird.

## Claims

1. A calibration device for a calibration, in particular a wet calibration, of an extrusion device, comprising
- a calibrating element (2) which includes an opening (21) for guiding through a profile produced by means of an extrusion die of the extrusion device; and
- at least one rotatable guide roller (3) which is in contact with the profile when the profile is guided through the opening (21); and
- at least one separate bearing element (4) insertable into a cutout (22) of the calibrating element (2), via which the guide roller (3) can rotatably be mounted on the calibrating element (2),
**characterized in that**
the bearing element (4) is positively fixed at the calibrating element (2) such that a shifting of the bearing element (4) in the direction of movement of the profile is counteracted and / or the bearing element (4) includes at least one stop (421) which cooperates with an edge or a surface of the calibrating element (2) which borders the cutout (22) such that it positively secures the bearing element (4) against being shifted in the direction of movement of the profile.

2. The calibration device according to claim 1, **characterized in that** the bearing element (4) has at least one wedge-shaped structure (422) which can cooperate with a boundary surface of the cutout (22) such that it non-positively fixes the bearing element (4) at the calibrating element (2).

3. The calibration device according to any of the preceding claims, **characterized in that** the bearing element (4) is formed curved, so that with one portion of a first long side and with two portions of a second long side, which is opposed to the first long side, it can rest against an inside of the cutout (22) such that the bearing element (4) is non-positively fixed at the calibrating element (2).

4. The calibration device according to any of the preceding claims, **characterized in that** the calibrating element (2) includes at least one stop (225) via which the bearing element (4) can positively be secured against being shifted in direction of extrusion (E) of the profile.

5. The calibration device according to any of the preceding claims, **characterized in that** the bearing element (4) includes a resilient portion (423) which can cooperate with a boundary surface of the cutout (22) such that it non-positively fixes the bearing element (4) at the calibrating element (2).

6. The calibration device according to any of the preceding claims, **characterized in that** the calibrating element (2) includes a resilient portion (223, 224) which acts on the bearing element (4) such that the bearing element (4) is non-positively fixed at the calibrating element (2).

7. The calibration device according to any of the preceding claims, **characterized by** a fastening element (5) penetrating the calibrating element (2) down to the cutout (22), via which the bearing element (4) can be fixed at the calibrating element (2), wherein in particular the fastening element (5) with one portion - as seen in direction of extrusion (E) of the profile - extends behind the bearing element (4), urges bluntly against the bearing element (4), protrudes into a counterbore of the bearing element (4) or can be screwed into a threaded bore of the bearing element (4).

8. The calibration device according to any of the preceding claims, **characterized in that** the trunnion (31) or the bearing pin (33) engages into a bore (45) of the bearing element (4) or into a sleeve (47) inserted into a bore (45') of the bearing element (4) or the trunnion or the bearing pin (46) engages into a bore of the guide roller (3) or into a sleeve inserted into a bore of the guide roller (3).

9. The calibration device according to any of the preceding claims, **characterized in that** a part of the bearing element (4) and/or a part of the guide roller (3), via which the guide roller (3) can be mounted on the bearing element (4), is formed of a metal or a plastic material.

10. The calibration device according to any of the preceding claims, **characterized in that** a part of the bearing element (4), via which the guide roller (3) can be mounted on the bearing element (4), is formed of a sintered metal alloy or a sintered hard metal.

11. A calibration method for calibrating profiles, in particular plastic profiles, by using a calibration device (1) according to any of the preceding claims, wherein a profile produced by means of an extrusion die of an extrusion device is guided through an opening (21) of the calibrating element (2), so that the rotatable guide roller (3) of the calibration device (1) is in contact with the profile.

12. A method for manufacturing a calibration device according to any of the preceding claims 1 to 10, with the following steps:
- providing a calibrating element (2) which includes an opening (21) for guiding through a profile produced by means of the extrusion device;
- providing at least one rotatable guide roller (3) which is in contact with the profile when the profile is guided through the opening (21); and
- inserting a bearing element (4) via which the guide roller (3) is rotatably mountable on the calibrating element (2) into a cutout (22) of the calibrating element (2),
**characterized in that**
the bearing element (4) will be positively fixed at the calibrating element (2) such that a shifting of the bearing element (4) in the direction of movement of the profile is counteracted and / or the bearing element (4) includes at least one stop (421) which cooperates with an edge or a surface of the calibrating element (2) which borders the cutout (22) such that it positively secures the bearing element (4) against being shifted in the direction of movement of the profile.

13. The method according to claim 12, **characterized in that** several different bearing elements (4) are provided, which define different positions of the axis of rotation of the guide roller (3) relative to the calibrating element (2), wherein one of the bearing elements (4) is selected and inserted into the cutout (22) of the calibrating element (2).

## Revendications

1. Dispositif d'étalonnage destiné à étalonner, en particulier étalonner en milieu humide, un dispositif d'extrusion, ledit dispositif d'étalonnage comprenant
- un élément d'étalonnage (2) qui comporte une ouverture (21) destinée au passage d'un profilé généré au moyen d'une buse d'extrusion du dispositif d'extrusion ; et
- au moins un galet de guidage rotatif (3) qui est en contact avec le profilé lorsque le profilé est guidé à travers l'ouverture (21) ; et
- au moins un élément formant palier séparé (4) qui peut être inséré dans un évidement (22) de l'élément d'étalonnage (2) et qui permet de loger le galet de guidage (3) à rotation au niveau de l'élément d'étalonnage (2),
**caractérisé en ce que**
l'élément formant palier (4) est fixé en force au niveau de l'élément d'étalonnage (2) de manière à s'opposer au coulissement de l'élément formant palier (4) dans le sens de déplacement du profilé et/ou l'élément formant palier (4) comporte au moins une butée (421) qui coopère avec un bord ou une surface de l'élément d'étalonnage (2) qui délimite l'évidement (22) de manière à immobiliser par complémentarité de forme l'élément formant palier (4) afin de l'empêcher de coulisser dans le sens de déplacement du profilé.

2. Dispositif d'étalonnage selon la revendication 1, **caractérisé en ce que** l'élément formant palier (4) comporte au moins une structure en forme de coin (422) qui peut coopérer avec une surface de délimitation de l'évidement (22) de manière à fixer en force l'élément formant palier (4) au niveau de l'élément d'étalonnage (2) .

3. Dispositif d'étalonnage selon l'une des revendications précédentes, **caractérisé en ce que** l'élément formant palier (4) est incurvé de façon à venir en appui, par une portion d'un premier côté long et par deux portions d'un deuxième côté long, qui est opposé au premier côté long, sur le côté intérieur de l'évidement (22) de manière à fixer en force l'élément formant palier (4) au niveau de l'élément d'étalonnage (2).

4. Dispositif d'étalonnage selon l'une des revendications précédentes, **caractérisé en ce que** l'élément d'étalonnage (2) comporte au moins une butée (225) permettant d'immobiliser l'élément formant palier (4) par complémentarité de formes pour l'empêcher de coulisser dans le sens d'extrusion (E) du profilé.

5. Dispositif d'étalonnage selon l'une des revendications précédentes, **caractérisé en ce que** l'élément formant palier (4) comporte une portion élastique (423) qui peut coopérer avec une surface de délimitation de l'évidement (22) de manière à fixer en force l'élément formant palier (4) au niveau de l'élément d'étalonnage (2).

6. Dispositif d'étalonnage selon l'une des revendications précédentes, **caractérisé en ce que** l'élément d'étalonnage (2) comporte une portion élastique (223, 224) qui peut agir sur l'élément formant palier (4) de manière à fixer en force l'élément formant palier (4) au niveau de l'élément d'étalonnage (2).

7. Dispositif d'étalonnage selon l'une des revendications précédentes, **caractérisé par** un élément de fixation (5) qui traverse l'élément d'étalonnage (2) jusqu'à l'évidement (22) et qui permet de fixer l'élément formant palier (4) au niveau de l'élément d'étalonnage (2), l'élément de fixation (5) s'étendant, en particulier par une portion, en arrière de l'élément de palier (4) par référence au sens d'extrusion (E) du profilé, pressant bord à bord contre l'élément formant palier (4), faisant saillie dans une dépression de l'élément formant palier (4) ou pouvant être vissé dans un trou fileté de l'élément formant palier (4).

8. Dispositif d'étalonnage selon l'une des revendications précédentes, **caractérisé en ce que** l'axe de palier (31) ou la tige de palier (33) s'engage dans un alésage (45) de l'élément formant palier (4) ou dans une douille (47) insérée dans un alésage (45') de l'élément formant palier (4) ou **en ce que** l'axe de palier ou la tige de palier (46) s'engage dans un alésage du galet de guidage (3) ou dans une douille insérée dans un alésage du galet de guidage (3).

9. Dispositif d'étalonnage selon l'une des revendications précédentes, **caractérisé en ce qu'**un composant de l'élément formant palier (4) et/ou un composant du galet de guidage (3), qui permet de loger le galet de guidage (3) au niveau de l'élément formant palier (4), est/sont formé(s) à partir d'un métal ou d'une matière synthétique.

10. Dispositif d'étalonnage selon l'une des revendications précédentes, **caractérisé en ce qu'**un composant de l'élément formant palier (4), qui permet de loger le galet de guidage (3) au niveau de l'élément formant palier (4), est formé à partir d'un alliage métallique fritté ou d'un métal dur fritté.

11. Procédé d'étalonnage destiné à étalonner des profilés, en particulier des profilés en matière synthétique, à l'aide d'un dispositif d'étalonnage (1) selon l'une des revendications précédentes, un profilé généré au moyen d'une buse d'extrusion d'un dispositif d'extrusion étant guidé à travers une ouverture (21) de l'élément d'étalonnage (2) de manière à ce que le galet de guidage rotatif (3) du dispositif d'étalonnage (1) soit en contact avec le profilé.

12. Procédé de fabrication d'un dispositif d'étalonnage selon l'une des revendications 1 à 10 précédentes, ledit procédé comprenant les étapes suivantes
- fournir un élément d'étalonnage (2) qui comporte une ouverture (21) permettant de guider un profilé généré par le dispositif d'extrusion ;
- fournir au moins un galet de guidage rotatif (3) qui est en contact avec le profilé lorsque le profilé est guidé à travers l'ouverture (21) ; et
- insérer un élément formant palier (4), permettant de loger le galet de guidage (3) à rotation au niveau de l'élément d'étalonnage (2), dans un évidement (22) de l'élément d'étalonnage (2),
**caractérisé en ce que**
l'élément formant palier (4) est fixé en force à l'élément d'étalonnage (2) de manière à s'opposer à un coulissement de l'élément formant palier (4) dans le sens de déplacement du profilé et/ou l'élément formant palier (4) comporte au moins une butée (421) qui coopère avec un bord ou une surface de l'élément d'étalonnage (2) qui délimite l'évidement (22) de manière à immobiliser par complémentarité de formes l'élément formant palier (4) pour l'empêcher de coulisser dans le sens de déplacement du profilé.

13. Procédé selon la revendication 12, **caractérisé en ce qu'**une pluralité d'éléments formant paliers différents (4) sont prévus, qui définissent différentes positions de l'axe de rotation du galet de guidage (3) par rapport à l'élément d'étalonnage (2), l'un des éléments formant palier (4) étant choisi et inséré dans l'évidement (22) de l'élément d'étalonnage (2).
